# EUROPÄISCHE PATENTSCHRIFT

(11) **EP 1 150 482 B1**
(45) Veröffentlichungstag und Bekanntmachung des Hinweises auf die Patenterteilung: **02.07.2003**
(21) Anmeldenummer: 01109424.0
(22) Anmeldetag: 20.04.2001
(51) Int. Cl.: H04M 17/00, G07F 7/10

(54) **Verfahren zur elektronischen Distribution von virtuellen Mobilfunk-Prepaid-Karten**
Method for the electronic distribution of virtual mobile prepaid cards
Procédé de distribution électronique de cartes virtuelles mobiles prépayées

(30) Priorität: 28.04.2000 DE 10020900
(43) Veröffentlichungstag der Anmeldung: 31.10.2001
(73) Patentinhaber: Cardmaxx.de AG, 80335 München (DE)
(72) Erfinder: Schwenke, Tim, 81667 München (DE); Schmidt, Andreas, 54318 Mertesdorf (DE)
(74) Vertreter: VOSSIUS & PARTNER

(56) Entgegenhaltungen:
- WO-A-96/38801
- WO-A-96/41462
- WO-A-98/21874
- WO-A-98/47112
- DE-A- 4 419 651
- GB-A- 2 339 625
- US-A- 5 696 908
- US-A- 5 868 236

## Beschreibung

Die Erfindung betrifft ein Verfahren zur elektronischen Distribution von virtuellen Mobilfunk-Prepaid-Karten. Insbesondere betrifft die Erfindung ein Verfahren zum Aufwerten von Mobiltelefonen zugeordneten Gebührenkonten unterschiedlicher Mobilfunk-Netzanbieter bzw. -Provider.

Auf dem Gebiet des Mobilfunkes versuchen die verschiedenen Mobilfunk-Netzanbieter bzw. -Provider durch verschiedene Tarifmodelle und Kontenmodelle Kunden für sich zu gewinnen. Auf herkömmliche Art schließt ein Kunde mit einem Anbieter bzw. -Provider einen in der Regel 24 Monate laufenden Vertrag ab, der eine bestimmte Grundgebühr sowie bestimmte Gebühren pro Telefoneinheit vorsieht. Die während eines Monats mit einem Mobiltelefon geführten Telefongespräche werden am Ende des Monats zusammen mit der vereinbarten Grundgebühr abgerechnet und beispielsweise im Wege des Einzugsverfahrens vom Kunden beglichen. Ein jüngeres Modell sieht vor, daß beim Kauf eines Mobiltelefons ein entsprechender Vertrag mit einem Anbieter bzw. -Provider geschlossen wird, der vorzugsweise ein bestimmtes Startguthaben vorsieht, das auf einen dem Kunden zugeordneten Konto verwaltet wird. Von diesem Startguthaben werden die Gebühren für jedes geführte Telefongespräch abgezogen, bis ein unterer Grenzwert erreicht ist. Daraufhin wird der Telefonkunde darüber informiert, daß das zur Verfügung stehende Guthaben nur noch einen geringen Restwert umfaßt. Der Kunde hat dann die Möglichkeit, sein Guthabenkonto wieder aufzuladen bzw. aufzuwerten. Dies erfolgt dadurch, daß der Kunde bei seinem Anbieter bzw.-Provider bzw. entsprechenden Vertragshändlem eine sogenannte Prepaid-Karte (im Scheckkartenformat) in Höhe des Betrages käuflich erwirbt, in dessen Höhe das Guthaben aufgewertet werden soll. Die gekaufte Karte ist mit einer verdeckten Codenummer versehen, die vom Käufer bzw. Kunden anschließend freigerubbelt werden muß. Anschließend hat der Kunde eine vom Anbieter bzw. -Provider zur Verfügung gestellte Telefonnummer eines Callcenters zu wählen, um der angewählten Stelle die freigerubbelte Codenummer durchzugeben. Durch diesen Vorgang wird der Netzanbieter bzw. -Provider vom käuflichen Erwerb eines Telefonguthabens in Höhe von beispielsweise DM 50,00 informiert und wertet das der Rufnummer des Kunden zugeordnete Gebührenkonto entsprechend auf. Alternativ dazu muß der Benutzer eine vorgegebene Telefonnummer und anschließend die Codenummer wählen bzw. eingeben, woraufhin eine automatische Ansage das Aufladen bestätigt.

Die beschriebene Vorgehensweise zum Aufwerten bzw. Aufladen des Gebührenkontos ist mit verschiedenen Nachteilen verbunden. Zunächst stellen die käuflich zu erwerbenden Karten einen erheblichen Kostenfaktor dar. Kosten für eine solche Karte entstehen für die Herstellung und Distribution an die einzelnen Verkaufsstellen über Großhändler und Zwischenhändler, sowie für die Entsorgung. Femer ist die Distribution dieser Karten an die einzelnen Verkaufsstellen mit einem hohen organisatorischen Aufwand verbunden. Diese Karten sind Einwegprodukte und somit nach deren Gebrauch zu entsorgen. Femer besteht eine hohe Diebstahlgefahr, bedingt durch die geringe Kartengröße. Letztendlich ist der immer wiederkehrende Erwerb solcher Karten für den Kunden mit einem nicht unerheblichen zeitlichen und finanziellen Aufwand verbunden.

Ein weiterer Nachteil besteht darin, daß der Kontostand lediglich um einen fest vorgegebenen Betrag - je nach erworbener Karte - erhöht werden kann.

Ferner ist diese Vorgehensweise immer auf den konkreten Mobilfunkanbieter beschränkt, so daß viele Distributionssysteme parallel bestehen.

Die WO 98/47112 beschreibt ein Verfahren gemäß der Präambel von Anspruch 1.

Demgegenüber liegt der Erfindung die Aufgabe zugrunde, ein Verfahren bereitzustellen, mit denen die Aufwertung von Mobiltelefonen zugeordneten Gebührenkonten unterschiedlicher Mobilfunk-Netzanbieter bzw. -Provider auf äußerst wirtschaftliche Weise und ohne großen technischen Aufwand realisierbar ist. Diese Aufgabe wird mit den Merkmalen der Ansprüche gelöst. Diese betreffen ein Verfahren zur elektronischen Distribution virtueller Mobilfunk-Prepaid-Karten.

Die Erfindung geht von dem Grundgedanken aus, eine Zentralstation bereitzustellen, an die ein Kunde von einer Basisstation aus über ein entsprechendes Kommunikationsnetzwerk herantritt, um die Bereitstellung des für die Aufwertung des Gebührenkontos benötigten Codes zu veranlassen.

Erfindungsgemäß werden in einem ersten Schritt kundenspezifische Daten und der gewünschte Aufwertebetrag vom Kunden über ein Kommunikationsnetzwerk an die Zentralstation übermittelt. Ferner erfolgt vorzugsweise eine Auswahl des benutzten Netzanbieters. Die gewünschten Aufwertebeträge sind dabei vorzugsweise fest vorgegeben, beispielsweise in Höhe von DM 25, 50, 100 usw., können aber auch variabel vom Benutzer gewählt werden. Die kundenspezifischen Daten umfassen vorzugsweise die Rufnummer des Mobiltelefons des Kunden und/oder dessen Kreditkartennummer. Letztere wird in der Zentralstation zur Abwicklung der Bezahlung des gewünschten Aufwertebetrages verwendet. Vorzugsweise erfolgt in der Zentralstation ein Überprüfen der Validität der Kreditkartennummer, um dadurch eine korrekte Abrechnung sicherzustellen. Bei positiver Validität erfolgt automatisch eine Abbuchung des gewünschten Betrages vom Kreditkartenkonto.

In einem weiteren Schritt wird dem Kunden anhand der von ihm bereitgestellten Daten bzw. Informationen automatisch eine Codenummer zugeteilt und übermittelt. Somit wird erfindungsgemäß eine virtuelle Mobilfunk-Prepaid-Karte auf elektronischem Wege übermittelt. Vorzugsweise werden zusätzlich zu der Codenummer das zugehörige erworbene Guthaben als Bestätigung, sowie Informationen zum zugehörigen Netz übermittelt. Weiter bevorzugt wird dem Kunden eine Rufnummer des Callcenters übermittelt, über die er das Guthaben aktivieren kann. Der bereitgestellte Code wird anschließend von dem Kunden an den Mobilfunk-Anbieter bzw. -Provider übermittelt, um diesen dadurch über den Kauf eines Gebührenguthabens zu informieren. Der Mobilfunk-Anbieter bzw. -Provider schaltet daraufhin den dem Code entsprechenden Aufwertebetrag für den entsprechenden Kunden frei, d.h. der Anbieter bzw. -Provider wertet das der Rufnummer des Kunden zugeordnete Gebührenkonto um den erworbenen Betrag auf.

Erfindungsgemäß erfolgt die Kommunikation zwischen Basisstation und Zentralstation vorzugsweise über das Internet. Hier kann beispielsweise der Kunde über einen PC mit Internetzugang mit der Zentralstation in kontakt treten. Alternativ geschieht dies mittels WAP (wireless application protocol) über das Mobiltelefon des Kunden. Alternativ zum Internet kann der Kunde über ein Mobilfunknetz, beispielsweise durch Versenden einer Kurzmitteilung SMS oder über ein Telefonfestnetz mit der Zentralstation in Kontakt treten. Der von der Zentralstation zugeteilte Code wird je nach gewähltem Kommunikationsnetzwerk via Internet, Mobilfunknetz (beispielsweise Kurzmitteilung SMS) oder das Telefonfestnetz automatisch an den Kunden übermittelt. In einer alternativen Ausführungsform ist in der Zentralstation ein sogenanntes Callcenter bereitgestellt, das als automatisches Bindeglied zwischen dem Kunden und der Zentralstation dient. Im Falle eines solchen automatischen Callcenters wird der Kunde mittels entsprechender Sprachcomputer-Ansagen dazu aufgefordert, die erforderlichen kundenspezifischen Daten und den gewünschten Aufwertebetrag über die Telefon-Tastatur zu übermitteln. Auch die Codebereitstellung erfolgt in diesem Fall automatisch per Sprachcomputer oder alternativ per SMS.

Ferner wird an der Zentralstation anhand der bei einer ersten Kontaktaufnahme übermittelten kundenspezifischen Daten eine Datenbank mit diesen kundenspezifischen Daten aufgebaut. Diese Daten umfassen beispielsweise Name, Postanschrift, Mobilfunk-Rufnummer, Kreditkartennummer und/oder Bankverbindung des Kunden. Dem Kunden wird daraufhin eine spezifische Kennziffer mitgeteilt, die er bei jeder weiteren Kontaktaufnahme der Zentralstation - wieder per Internet, WAP, SMS, etc. - übermittelt, die dann anhand der übermittelten Kennziffer den entsprechenden Kunden automatisch identifizieren kann.

Ferner weist die Zentralstation vorzugsweise eine Datenbank mit mindestens einem Code-Datensatz auf. Diese Code-Datensätze werden von den verschiedenen Netzanbietem bzw. -Providern der Zentralstation zur Verfügung gestellt bzw. an diese übermittelt. Diese Code-Datensätze weisen die Codes auf, die zum Aufwerten der Gebührenkonten in Form der virtuellen Mobilfunk-Prepaid-Karten an die Kunden ausgegeben werden. Vorzugsweise umfassen diese Codes bis zu 15 Stellen. Weiter bevorzugt weist die Datenbank Netzinformationen, beispielsweise D1, D2, e-plus, etc., auf, um die Codes den unterschiedlichen Netzen zuordnen zu können, sowie Angaben über die unterschiedlichen Guthabenhöhen, also DM 25, 50, 100.

Der von der Zentralstation zur Verfügung gestellte Code wird erfindungsgemäß vom Kunden über ein Kommunikationsnetzwerk an den Netzanbieter bzw. -Provider übermittelt. In einer ersten Ausführungsform erfolgt dies über das Internet durch Eingabe der eigenen Mobilfunk-Rufnummer und des von der Zentralstation zur Verfügung gestellten Codes. In einer alternativen Ausführungsform tritt der Kunde mittels eines automatischen Callcenters mit dem Netzanbieter bzw. -Provider in Kontakt, um die für die Aufwertung des Gebührenkontos erforderliche Codenummer und Mobilfunk-Rufnummer per Telefon-Tastatur zu übermitteln.

Sofern das Übermitteln der kundenspezifischen Daten und des gewünschten Aufwertebetrages an die Zentralstation bzw. das Übermitteln des Codes an den Netzanbieter bzw. -Provider über das Mobiltelefon erfolgt, wird die Mobilfunk-Rufnummer vorzugsweise vom Empfänger (d.h. Zentralstation und/oder Netzanbieter bzw. -Provider) automatisch erkannt.

Weiter bevorzugt übermittelt die Zentralstation den zugeteilten Code, d.h. die virtuelle Mobilfunk-Prepaid-Karte automatisch direkt per Kommunikationsnetzwerk an den Netzanbieter bzw. -Provider, so daß die Guthabenaufwertung automatisch erfolgt.

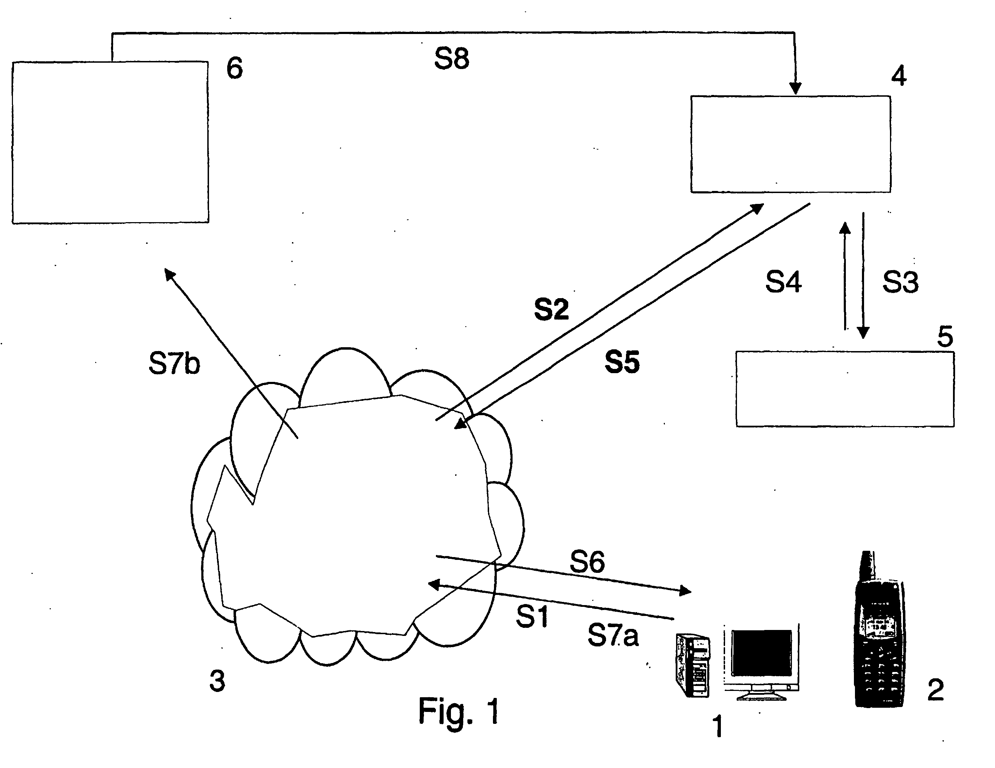

Fig. 1 zeigt eine bevorzugte Ausführungsform des erfindungsgemäßen Verfahrens zur elektronischen Distribution von virtuellen Mobilfunk-Prepaid-Karten. Bei dieser Ausführungsform verschafft sich ein Kunde beispielsweise über einen PC 1 oder ein Mobiltelefon 2 als Basisstation in einem ersten Schritt S1 Zugang zu einem Kommunikationsnetzwerk 3, wie etwa das Internet. Über dieses Kommunikationsnetzwerk werden in den Schritten S1 und S2 die kundenspezifischen Daten und der gewünschte Aufwertebetrag an eine Zentralstation 4 übertragen. Dort erfolgt in der gezeigten Ausführungsform in einer Einheit 5 in den Schritten S3 und S4 eine Validitätsüberprüfung der übermittelten Kreditkartennummer. Sofern diese Prüfung positiv verläuft und dem Kunden eine entsprechende Codenummer zugeteilt wurde, wird diese in den Schritten S5 und S6 über das Internet an den Kunden übermittelt. Daraufhin wird diese Codenummer in den Schritten S7a und S7b an den Mobilfunk-Netzanbieter bzw. -Provider 6 übermittelt, der daraufhin die Aufwertung des Gebührenkontos vornimmt. Im Schritt S8 erfolgt in regelmäßigen oder unregelmäßigen Abständen eine Übermittlung von Datensätzen mit Codenummern an die Zentralstation 4.

## Patentansprüche

1. Verfahren zur elektronischen Distribution von virtuellen Mobilfunk-Prepaid-Karten, mit den Schritten:
a) Übermitteln von kundenspezifischen Daten und eines gewünschten Aufwerfebetrages von einer Basisstation (1, 2) über ein Kommunikationsnetzwerk (3) an eine Zentralstation (4);
b) Automatisches Zuteilen und anschließendes Übermitteln eines Codes entsprechend dem übermittelten Aufwertebetrag von der Zentralstation (4) an die Basisstation (1, 2);
c) Übermitteln des von der Zentralstation (4) bereitgestellten Codes an einen Mobilfunk-Netzanbieter bzw. -Provider (6); und
d) Freischalten des dem Code entsprechenden Aufwertebetrages für die spezifische Basisstation (1, 2) durch den Mobilfunk-Netzanbieter bzw.-Provider (6),
**gekennzeichnet durch** die elektronische Distribution virtueller Mobilfunk-Prepaid-Karten unterschiedlicher Mobilfunk-Netzanbieter bzw. -Provider, wobei bei einer ersten Kontaktaufnahme einer Basisstation mit der Zentralstation kundenspezifische Daten gespeichert werden und dem Kunden eine spezifische Kennziffer zugeteilt wird, die Zentralstation den Kunden bei nach der ersten Kontaktaufnahme erfolgenden weiteren Kontaktaufnahmen anhand der spezifischen Kennziffer identifiziert.

2. Verfahren nach Anspruch 1, wobei als Kommunikationsnetzwerk das Internet, ein Mobilfunknetzwerk oder ein Telefonfestnetz verwendet wird.

3. Verfahren nach Anspruch 1 oder 2, wobei in den Schritten a) und/oder c) die Übermittlung über WAP und/oder SMS erfolgt

4. Verfahren nach Anspruch 1, 2 oder 3, wobei in den Schritten a) und/oder c) die Übermittlung über ein automatisches Callcenter mit Sprachcomputer erfolgt.

5. Verfahren nach einem der Ansprüche 1 bis 4, wobei die kundenspezifischen Daten die einem Mobiltelefon zugeordnete Rufnummer und eine Kreditkartennummer aufweisen.

6. Verfahren nach einem der Ansprüche 1 bis 5, wobei die kundenspezifischen Daten die spezifische Kennziffer aufweisen.

7. Verfahren nach einem der Ansprüche 1 bis 6, wobei in Schritt a) ferner eine Auswahl eines gewünschten Mobilfunk-Netzanbieters bzw. -Providers erfolgt und der ausgewählte Anbieter bzw. -Provider der Zentralstation übermittelt wird.

8. Verfahren nach einem der Ansprüche 1 bis 7, femer mit dem Schritt Übermitteln von Code-Datensätzen von dem Mobilfunk-Netzanbieter bzw. -Provider an die Zentralstation.

## Claims

1. A method for the electronic distribution of virtual mobile prepaid cards, comprising the steps of:
a) transmitting customised data and a desired prepaid amount from a base station (1, 2) via a communication network (3) to a central station (4);
b) automatically allocating and subsequently transferring a code corresponding to the transmitted prepaid amount from the central station (4) to the base station (1, 2);
c) transmitting the code provided by the central station (4) to a mobile phone network provider or a mobile phone service provider (6), respectively; and
d) enabling service for the prepaid amount corresponding to the code for the specific base station (1, 2) by the mobile phone network provider or the mobile phone service provider (6), respectively;
**characterised by** the electronic distribution of virtual mobile prepaid cards of different mobile phone network providers or mobile phone service providers, respectively, wherein when the base station first contacts the central station, customised data are stored and the customer is assigned a specific reference number and, every time the customer contacts the central station after the first contact, the central station identifies the customer by means of the specific reference number.

2. The method according to claim 1, wherein the internet, a cellular network or a land line is used as communication network.

3. The method according to claim 1 or 2, wherein the transmission in steps a) and/or c) is effected via WAP and/or SMS.

4. The method according to claim 1, 2 or 3, wherein the transmission in steps a) and/or c) is effected via an automatic call centre with speech-operated computers.

5. The method according to claims 1 to 4, wherein the customised data comprise the call number assigned to the mobile phone and a credit card number.

6. The method according to any of claims 1 to 5, wherein the customised data comprise said specific reference number.

7. The method according to any of claims 1 to 6, wherein in step a) a desired mobile phone network provider or a mobile phone service provider is further selected and the selected provider is transmitted to the central station.

8. The method according to any of claims 1 to 7, further comprising the step of transmitting code data sets from the mobile network service provider or the mobile phone service provider to the central station.

## Revendications

1. Procédé de distribution électronique de cartes virtuelles prépayées pour téléphonie mobile, présentant les étapes suivantes :
a) transmission de données spécifiques au client et d'un montant de crédit souhaité, depuis une station de base (1, 2), par un réseau de communication (3) à une station centrale (4) ;
b) attribution automatique et transmission subséquente d'un code correspondant au montant à créditer transmis par la station centrale (4) à la station de base (1, 2) ;
c) transmission du code fourni par la station centrale (4) à un fournisseur de réseau ou de service de téléphonie mobile (6) ; et
d) l'établissement d'un crédit correspondant au code, pour la station de base (1, 2) spécifique, par le fournisseur de réseau ou de service de téléphonie mobile (6) ;
**caractérisé par** la distribution électronique de cartes virtuelles prépayées pour téléphoniques mobiles de différents fournisseurs de réseau ou de service de téléphonie mobile, dans lequel, lors d'une première prise de contact d'une station de base avec la station centrale, des données spécifiques au client sont mémorisées et un identifiant spécifique est affecté aux clients, la station de base identifiant le client lors des autres prises de contact postérieurement à la première prise de contact, en utilisant l'identifiant spécifique.

2. Procédé selon la revendication 1, dans lequel on utilise comme réseau de communication l'Internet, un réseau de téléphonie mobile ou un réseau de téléphonie fixe.

3. Procédé selon la revendication 1 ou 2, dans lequel, la transmission se fait, aux étapes a) et/ou c), par WAP et/ou SMS.

4. Procédé selon la revendication 1, 2 ou 3, dans lequel, aux étapes a) et/ou c), la transmission s'effectue par un centre d'appel automatique muni d'un ordinateur à commurication vocale.

5. Procédé selon l'une des revendications 1 à 4, dans lequel, les données spécifiques au client présentent le numéro d'appel associé au téléphone mobile et un numéro de carte de crédit.

6. Procédé selon l'une des revendications 1 à 5, dans lequel, les données spécifiques au client présentent l'identifiant spécifique.

7. Procédé selon l'une des revendications 1 à 6, dans lequel, à l'étape a), en outre est effectuée une sélection d'un fournisseur de réseau ou de service de téléphonie mobile souhaité et l'identité du fournisseur souhaité est transmis au poste central.

8. Procédé selon l'une des revendications 1 à 7, comprenant en outre l'étape de transmission de jeux de données de code du fournisseur de réseau ou de service de téléphonie mobile, à la station centrale.
